**Europäisches Patentamt**

**European Patent Office**

**Office européen des brevets**

(19)

(11) Veröffentlichungsnummer : **0 075 749**
**B1**

(12)

# EUROPÄISCHE PATENTSCHRIFT

(45) Veröffentlichungstag der Patentschrift :
**13.03.85**

(21) Anmeldenummer : **82108154.4**

(22) Anmeldetag : **03.09.82**

(51) Int. Cl.⁴ : **H 02 K   7/116, H 02 K   7/06,**
**B 25 J 11/00, B 23 Q   5/10**

(54) **Zweiachsiger elektrischer Kompaktantrieb, insbesondere Stellantrieb.**

(30) Priorität : **17.09.81 DE 3137101**

(43) Veröffentlichungstag der Anmeldung :
**06.04.83 Patentblatt 83/14**

(45) Bekanntmachung des Hinweises auf die Patenterteilung : **13.03.85 Patentblatt 85/11**

(84) Benannte Vertragsstaaten :
**CH LI SE**

(56) Entgegenhaltungen :
**DE-A- 2 719 568**
**DE-C-   481 823**
**US-A- 2 860 266**
**US-A- 3 239 699**
**US-A- 4 108 015**

(73) Patentinhaber : **KRAFTWERK UNION AKTIENGE-**
**SELLSCHAFT**
**Wiesenstrasse 35**
**D-4330 Mülheim (Ruhr) (DE)**

(72) Erfinder : **Koch, Dietmar**
**Prinzess-Luise-Strasse 103**
**D-4330 Mülheim (Ruhr) (DE)**

(74) Vertreter : **Mehl, Ernst, Dipl.-Ing. et al**
**Postfach 22 01 76**
**D-8000 München 22 (DE)**

Jouve, 18, rue St-Denis, 75001 Paris, France

## Beschreibung

Die Erfindung bezieht sich auf einen elektrischen Kompaktantrieb gemäß dem Oberbegriff des Anspruchs 1.

Derartige elektrische Kompaktantriebe können beispielsweise als Stellantriebe für Positionieraufgaben in der Meß- und Regeltechnik oder in der Robotertechnik eingesetzt werden. Dabei müssen die von den beiden Antriebswellen abgeleiteten Stellbewegungen vollkommen unabhängig voneinander ausgeführt werden können, d. h. eine gegenseitige Beeinflussung der beiden zu einem Kompaktantrieb integrierten Antriebe sollte entweder von vornherein ausgeschlossen oder vollständig kompensiert werden. Ist nun aber zur Erzielung einer möglichst kompakten Bauweise die erste Antriebswelle innerhalb der als Hohlwelle ausgebildeten zweiten Antriebswelle angeordnet, so kann eine gegenseitige Beeinflussung der beiden Antriebe aus konstruktiven Gründen nicht ausgeschlossen werden. Die in der zweiten Antriebswelle gelagerte erste Antriebswelle läuft in diesem Fall mit der zweiten Antriebswelle um deren Achse um, wobei die Relativbewegung zwischen der ersten Antriebswelle und dem zugehörigen Antrieb zu einer unerwünschten Drehung der ersten Antriebswelle führt.

Der Erfindung liegt daher die Aufgabe zugrunde, einen elektrischen Kompaktantrieb mit zwei unabhängig voneinander antreibbaren Antriebswellen zu schaffen, bei welchem die erste Antriebswelle innerhalb der als Hohlwelle ausgebildeten zweiten Antriebswelle angeordnet ist und die dadurch bedingte gegenseitige Beeinflussung der beiden Antriebe vollständig kompensiert wird.

Diese Aufgabe wird erfindungsgemäß durch die im kennzeichnenden Teil des Anspruchs 1 aufgeführten Merkmale gelöst.

Der Erfindung liegt die Erkenntnis zugrunde, daß zur Kompensation der gegenseitigen Beeinflussung beider Antriebe dem ersten Antriebsmotor eine zusätzliche Drehbewegung aufgezwungen werden muß, welche stets der Drehbewegung der zweiten Antriebswelle entspricht. Diese überlagerte Drehbewegung wird dadurch erreicht, daß durch die starre Kupplung der Statoren beider Antriebsmotoren, des Abtriebselements des Getriebes und der zweiten Antriebswelle ein synchroner Lauf dieser Antriebselemente erzielt wird, wobei auch dem Rotor des ersten Antriebsmotors durch das zwischen Rotor und Stator vorhandene Haltemoment dieser synchrone Lauf aufgezwungen wird. Die zur Erzielung dieses synchronen Laufs erforderliche Kupplung der genannten Antriebselemente wird dabei aber erst dadurch ermöglicht daß der zweite Antriebsmotor als Hohlwellenmotor ausgebildet ist und daß durch einen entsprechenden koaxialen Aufbau des Getriebes dessen inneres Antriebselement mit dem Rotor und dessen äußeres Abtriebselement mit dem Stator des zweiten Antriebsmotors verbunden werden kann.

Bei einer bevorzugten Ausgestaltung des erfindungsgemäßen Kompaktantriebs ist vorgesehen, daß das Getriebe ein Spannungswellengetriebe ist, dessen Spannungswellenerzeuger das innere Antriebselement und dessen außenverzahntes Spannrad das äußere Abtriebselement bildet, wobei das Spannrad mit einem feststehenden innenverzahnten Außenring im Eingriff steht. Ein derartiges Spannungswellengetriebe, dessen Wirkungsweise beispielsweise aus der DE-PS 1 650 714 bekannt ist, weist einerseits den geforderten koaxialen Aufbau von innerem Antriebselement und äußerem Abtriebselement auf und läßt sich andererseits durch seine kompakte Bauweise problemlos in den erfindungsgemäßen Kompaktantrieb integrieren. Dabei kann der feststehende Außenring des Spannungswellengetriebes mit dem Gehäuse des Kompaktantriebes verbunden werden oder einen Bestandteil dieses Gehäuses bilden.

Bei einer weiteren bevorzugten Ausgestaltung des erfindungsgemäßen Kompaktantriebes ist der erste Antriebsmotor ebenfalls als Hohlwellenmotor ausgebildet. Dies hat insbesondere den Vorteil, daß der Rotor des ersten Antriebsmotors auf eine zentrale Hohlwelle aufgesetzt werden kann, deren zentrale Innenbohrung beispielsweise die Durchführung von Kabeln, Schläuchen, Betätigungsstangen und dergleichen ermöglicht. Dabei kann die zentrale Hohlwelle die erste Antriebswelle über ein Zahnradpaar antreiben. Durch die zentrale Hohlwelle kann aber auch eine Hub- und Drehspindel hindurchgeführt werden. Der Hubantrieb der Hub- und Drehspindel ist hierbei vorzugsweise von der ersten Antriebswelle abgeleitet, während der Drehantrieb der Hub- und Drehspindel von der zweiten Antriebswelle abgeleitet ist. Die Hub- und Drehspindel kann somit in Achsrichtung verstellt und vollkommen unabhängig davon um ihre Achse gedreht werden.

Der Hohlwellenteil der zweiten Antriebswelle kann exzentrisch zu ihrer Drehachse ausgerichtet sein, so daß auch bei einem geringen Außendurchmesser dieses Hohlwellenteils die gleichzeitige Unterbringung der ersten Antriebswelle und einer Hub- und Drehspindel ermöglicht wird. Dabei können auch die Übertragungselemente zwischen der ersten Antriebswelle bzw. der zweiten Antriebswelle und der Hub- und Drehspindel innerhalb des Hohlwellenteils der zweiten Antriebswelle angeordnet sein. Dadurch ergibt sich ein äußerst kompakter Stellantrieb für eine Hub- und Drehspindel. Der gesamte Stellantrieb kann dabei hermetisch abgedichtet werden, daß das freie Ende des Hohlwellenteils durch eine Kappe verschlossen wird.

Im folgenden sind Aufbau und Wirkungsweise eines Ausführungsbeispiels der Erfindung anhand der Zeichnung näher erläutert.

Dabei zeigt :

Figur 1 einen teilweisen Längsschnitt durch den zweiachsigen elektrischen Kompaktantrieb eines Stellgeräts,

Figur 2 den Antrieb einer Hub- und Drehspindel des Stellgeräts durch die beiden Antriebswellen des Kompaktantriebs im Längsschnitt und

Figur 3 einen Schnitt gemäß der Linie III-III der Fig. 2.

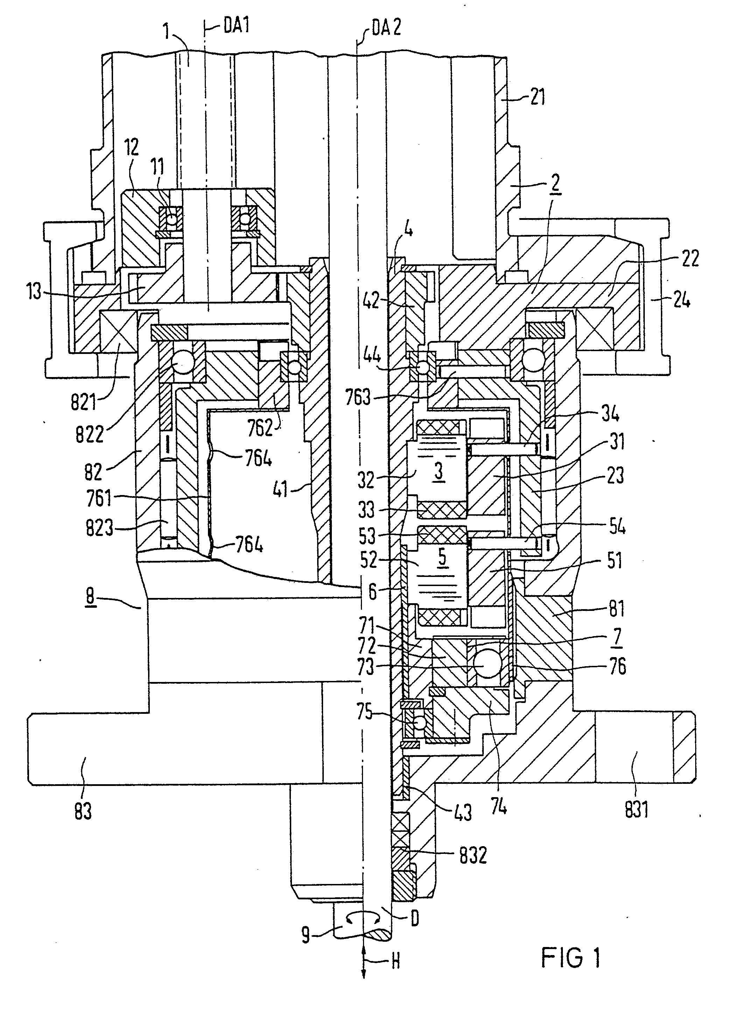

Fig. 1 zeigt einen teilweisen Längsschnitt durch den elektrischen Kompaktantrieb eines Stellgeräts. Dieser Kompaktantrieb besitzt eine erste Antriebswelle 1, welche innerhalb einer als Hohlwelle ausgebildeten und insgesamt mit 2 bezeichneten zweiten Antriebswelle angeordnet ist. In ihrem endseitigen Bereich ist die erste Antriebswelle 1 durch ein Radial-Rillenkugellager 11 geführt, welches seinerseits in einem fest mit der zweiten Antriebswelle 2 verbundenen Lagerbügel 12 untergebracht ist. Die erste Antriebswelle 1 kann sich somit einerseits um ihre Drehachse DA 1 drehen, während sie andererseits bei einer Drehung der zweiten Antriebswelle 2 um deren Drehachse DA 2 umläuft. Die zweite Antriebswelle 2 ist aus mehreren Teilen zusammengesetzt, wobei sich in axialer Richtung an einen rohrförmigen Hohlwellenteil 21 eine Hohlwellen-Tragplatte 22 und ein Hohlwellen-Anschlußteil 23 anschließen. Diese Teile der zweiten Antriebswelle 2 sind drehfest miteinander verbunden, wobei die Verbindung zwischen dem Hohlwellenteil 21 und der Hohlwellen-Tragplatte 22 durch Bügel 24 erfolgt. Der Hohlwellenteil 21 ist dabei aus später noch zu erläuternden Gründen exzentrisch zur Drehachse DA 2 der zweiten Antriebswelle 2 ausgerichtet.

Der ersten Antriebswelle 1 ist ein als Hohlwellenmotor ausgebildeter erster Antriebsmotor 3 zugeordnet, von welchem in der rechten Hälfte des in Fig. 1 dargestellten Schnittes ein Permanentmagnete enthaltender Stator 31, ein Rotor 32 und eine Rotorwicklung 33 zu erkennen sind. Der Stator 31 ist mit Hilfe von mehreren Zentrierbolzen 34 in dem Hohlwellen-Anschlußteil 23 befestigt, während der Rotor 32 auf der Sitzfläche 41 einer zentralen Hohlwelle 4 befestigt ist. Der erste Antriebsmotor 3 treibt die erste Antriebswelle 1 über die zentrale Hohlwelle 4 und ein Zahnradpaar an, welches aus einem auf der zentralen Hohlwelle befestigten Zahnrad 42 und einem auf der ersten Antriebswelle 1 befestigten Zahnrad 13 besteht.

Der zweiten Antriebswelle 2 ist ein ebenfalls als Hohlwellenmotor ausgebildeter zweiter Antriebsmotor 5 zugeordnet, von welchem in der rechten Hälfte des in Fig. 1 dargestellten Schnittes ein Permanentmagnete enthaltender Stator 51, ein Rotor 52 und eine Rotorwicklung 53 zu erkennen sind. Der Stator 51 ist mit Hilfe von mehreren Zentrierbolzen 54 in dem Hohlwellen-Anschlußteil 23 befestigt, während der Rotor 52 auf die Außenfläche einer Gleitlagerbüchse 6 aufgeklebt ist, welche mit ihrer Innenfläche auf der zentralen Hohlwelle 4 gleitet. Der zweite Antriebsmotor 5 treibt die zweite Antriebswelle 2 über ein koaxial aufgebautes und insgesamt mit 7 bezeichneten Spannungswellengetriebe an. Als inneres Antriebselement dieses Spannungswellengetriebes dient ein Spannungswellenerzeuger, welcher aus einem auf die Außenfläche der Gleitlagerbüchse 6 aufgeklebten Grundring 71, einem auf dem Grundring 71 befestigten Wellenteil 72 mit elliptischer Außenkontur und einem auf den Wellenteil 72 aufgezogenen Wälzlager 73 besteht. Ein seitlich an dem Wellenerzeuger befestigter Haltering 74 sichert die Teile gegen axiales Verschieben und ist in radialer Richtung über ein Radial-Rillenkugellager 75 auf der zentralen Hohlwelle 4 abgestützt. Als äußeres Abtriebselement des Spannungswellengetriebes 7 dient ein außenverzahntes elastisches Spannrad 76, welches in axialer Richtung einen zahnlosen Verlängerungsbereich 761 aufweist und über einen Haltering 762 und Haltestifte 763 mit dem Hohlwellen-Anschlußteil 23 verbunden ist. Der zahnlose Verlängerungsbereich 761 weist dabei für den Durchtritt der Zentrierbolzen 34 bzw. 54 bestimmte Löcher 764 auf. Das außenverzahnte elastische Spannrad 76 befindet sich über der großen Ellipsenachse im Eingriff mit einem innenverzahnten Außenring 81, welcher feststeht und Bestandteil eines insgesamt mit 8 bezeichneten Außengehäuses ist.

Das Außengehäuse 8 besteht aus dem bereits erwähnten Außenring 81, einem zylindrischen Gehäuseteil 82 und einem Gehäuseflanschteil 83, wobei der Gehäuseflanschteil 83 für die Befestigung des gesamten Stellgeräts vorgesehen ist und entsprechende Bohrungen 831 aufweist. Das gesamte Außengehäuse 8 ist druckdicht ausgeführt, wobei zwischen dem zylindrischen Gehäuseteil 82 und der Hohlwellen-Tragplatte 22 eine Dichtung 821 und zwischen dem Gehäuseflanschteil 83 und einer durch die zentrale Hohlwelle 4 hindurchgeführten Hub- und Drehspindel 9 eine Stopfbüchse 832 angeordnet sind. In dem feststehenden Außengehäuse 8 ist außerdem die zweite Antriebswelle 2 gelagert. Hierzu sind zwischen dem zylindrischen Gehäuseteil 82 und der zweiten Antriebswelle 2 im Bereich der Verbindung zwischen der Hohlwellen-Tragplatte 2 und dem Hohlwellen-Anschlußteil 23 ein Radial-Rillenkugellager 822 und in einem daran anschließenden zylindrischen Bereich des Hohlwellen-Anschlußteils 23 eine Nadel-Lagerung 823 vorgesehen. Die zentrale Hohlwelle 4 ist in ihrem einen Endbereich über eine Gleitlagerbüchse 43 in dem Gehäuseflanschteil 83 gelagert, während auf der gegenüberliegenden Seite die Lagerung über ein Radial-Rillenkugellager 44 erfolgt, welches in Höhe des Radial-Rillenkugellagers 822 zwischen der zentralen Hohlwelle 4 und dem Haltering 762 angeordnet ist.

Bei dem in Fig. 1 dargestellten Kompaktantrieb würde sich eine wechselseitige Beeinflussung der beiden Antriebe ergeben, wenn sich bei einer Drehung der zweiten Antriebswelle 2 das dann ebenfalls um die Drehachse DA 2 umlaufende Zahnrad 13 auf dem Zahnrad 42 abwälzen und damit eine Drehung der ersten Antriebswelle 1 um die Drehachse DA 1 verursachen würde. Durch die Verbindung des Stators 31 des ersten Antriebsmotors 3 mit der zweiten Antriebswelle 2 wird diese wechselseitige Beeinflussung jedoch kompensiert. Zwischen dem Stator 31 und dem Rotor 32 des ersten Antriebsmotors 3 ist ein Haltemoment vorhanden, welches durch ein Kurzschließen der Rotorwicklung 33 noch verstärkt werden kann und auf die zentrale Hohlwelle 4 mit dem Zahnrad 42 genau die zur Kompensation erforderliche Drehbewegung überträgt. Eine Drehung der ersten Antriebswelle 1 um ihre Drehachse DA 1 stellt sich somit nur dann ein, wenn der erste Antriebsmotor 3 betätigt wird und eine Relativbewegung zwischen seinem Stator 31 und seinem Rotor 32 auftritt. Diese unabhängige Drehbewegung der ersten Antriebswelle 1 soll in eine Hubbewegung der Hub- und Drehspindel 9 umgewandelt werden, während die Drehbewegung der zweiten Antriebswelle 2 in eine entsprechende Drehbewegung der Hub- und Drehspindel 9 umgesetzt werden soll. Auf diese Weise kann beispielsweise ein am Ende der Hub- und Drehspindel 9 angeordnetes Meßgerät oder Werkzeug in Längsrichtung der Drehachse DA 2 verstellt werden und unabhängig davon bis zu einer vorgegebenen Winkeleinstellung gedreht werden. Diese Hub- und Drehbewegungen der Hub- und Drehspindel 9 sind in Fig. 1 durch die Doppelpfeile H und D angedeutet.

Die Stromzuführung zu den in den Statoren 31 und 51 der Antriebsmotoren 3 bzw. 5 gehaltenen Bürsten kann über in der Zeichnung nicht dargestellte Schleifringübertrager erfolgen, die beispielsweise zwischen dem Hohlwellen-Anschlußteil 23 und dem zylindrischen Gehäuseteil 82 des Außengehäuses 8 angeordnet sind. Bei einer Begrenzung der Drehbewegung D auf wenige Umdrehungen können die Stromzuführungen aber auch durch die Wandung des Hohlwellenteils 21 hindurchgeführt werden, da der Hohlwellenteil 21 und die Statoren 31 und 51 ja synchron umlaufen.

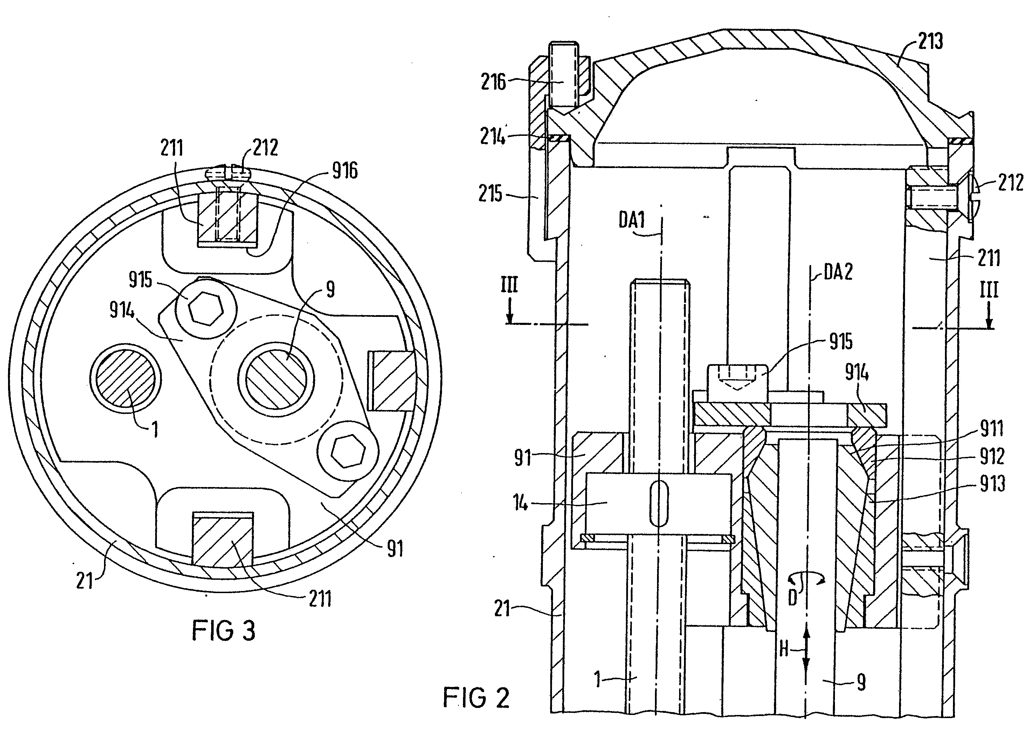

Das Umsetzen der Drehbewegung der ersten Antriebswelle 1 in eine Hubbewegung H der Hub- und Drehspindel 9 und das Umsetzen der Drehbewegung der zweiten Antriebswelle 2 in eine Drehbewegung D der Hub- und Drehspindel 9 geht aus den Figuren 2 und 3 hervor. Wie dort zu erkennen ist, erfolgt die Umsetzung mit Hilfe eines Mitnehmerkörpers 91, welcher innerhalb des Hohlwellenteils 21 angeordnet und auf der Hub- und Drehspindel 9 in Richtung der Drehachse DA 2 verstellbar befestigt ist. Diese einstellbare Befestigung erfolgt über einen inneren Spannkörper 911, welcher zwei entgegengesetzt geneigte Außenkegel aufweist und über zwei äußere Spannkörper 912 bzw. 913, welche jeweils einen entsprechenden Innenkegel besitzen, wobei die Spannkraft über eine Spannbrille 914 und zwei im Mitnehmerkörper 91 gehaltenen Spannschrauben 915 erfolgt. Die Umwandlung der Drehbewegung der ersten Antriebswelle 1 in eine Hubbewegung H der Hub- und Drehspindel 9 erfolgt über eine Hubmutter 14, welche auf ein Außengewinde der ersten Antriebswelle 1 aufgesetzt und in dem Mitnehmerkörper 91 gehalten sowie gegen Verdrehung gesichert ist. Die Übertragung der Drehung des Hohlwellenteils 21 in eine Drehbewegung D der Hub- und Drehspindel 9 erfolgt über drei Mitnehmerleisten 211, welche parallel zu der Drehachse DA 1 bzw. DA 2 ausgerichtet und jeweils um Winkel von 90° zueinander versetzt am Innenumfang des Hohlwellenteils 21 mit Hilfe von Schrauben 212 befestigt sind, wobei sich durch den Rohrquerschnitt des Hohlwellenteils 21 eine hohe Torsionsfestigkeit ergibt. Diese Mitnehmerleisten 211 greifen in entsprechende U-förmige Aussparungen 916 des Mitnehmerkörpers 91 ein, wobei eine der Hubbewegung H entsprechende Verschiebung nicht behindert wird.

In dem Schnittbild der Fig. 2 ist auch zu erkennen, daß das freie Ende des Hohlwellenteils 21 durch eine Kappe 213 verschlossen und mit Hilfe einer Dichtung 214 abgedichtet ist. Die für die Abdichtung erforderliche Anpreßkraft wird dabei über Spannbügel 215 und Spannschrauben 216 aufgebracht.

Die Fig. 2 und 3 zeigen auch, daß die bereits an früherer Stelle erwähnte zu seiner Drehachse DA 2 exzentrische Anordnung des Hohlwellenteils 21 die raumsparende Unterbringung der ersten Antriebswelle 1, der Hub- und Drehspindel 9 und des Mitnehmerkörpers 91 im Innern des Hohlwellenteils 21 begünstigt. Auf diese Weise kann im Zusammenhang mit der gedrängten Bauweise des zugehörigen elektrischen Kompaktantriebs die Baugröße des gesamten Stellgeräts auf ein Minimum reduziert werden. Im dargestellten Ausführungsbeispiel beträgt der größte Durchmesser des Stellgeräts am Gehäuseflansch 83 (Fig. 1) beispielsweise 110 mm, während die Bauhöhe des gesamten Stellgerätes von dem geforderten Hub H der Hub- und Drehspindel 9 abhängt.

**Ansprüche**

1. Elektrischer Kompaktantrieb, insbesondere Stellantrieb, mit zwei unabhängig voneinander antreibbaren Antriebswellen, wobei die erste Antriebswelle (1) innerhalb der als Hohlwelle ausgebildeten zweiten Antriebswelle (2) angeordnet ist, gekennzeichnet durch folgende Merkmale :

a) der ersten Antriebswelle (1) ist ein erster Antriebsmotor (3) zugeordnet ;

b) der zweiten Antriebswelle (2) ist ein als Hohlwellenmotor ausgebildeter zweiter Antriebsmotor (5) zugeordnet ;

c) zwischen den zweiten Antriebsmotor (5) und die zweite Antriebswelle (2) ist ein Getriebe (7) geschaltet, dessen mit dem Rotor (52) des zweiten Antriebsmotors (5) gekuppeltes inneres Antriebselement koaxial zu einem äußeren Abtriebselement angeordnet ist ;

d) der Stator (31) des ersten Antriebsmotors (3), der Stator (51) des zweiten Antriebsmotors, (5), das äußere Abtriebselement des Getriebes (7) und die zweite Antriebswelle (2) sind zum Erzielen von Gleichlauf starr miteinander gekuppelt.

2. Elektrischer Kompaktantrieb nach Anspruch 1, dadurch gekennzeichnet, daß das Getriebe (7) ein Spannungswellengetriebe ist, dessen Spannungswellenerzeuger (71, 72, 73) das innere Antriebselement und dessen außenverzahntes elastisches Spannrad (76) das äußere Abtriebselement bildet, wobei das Spannrad (76) mit einem feststehenden innenverzahnten Außenring (81) im Eingriff steht.

3. Elektrischer Kompaktantrieb nach Anspruch 1 oder 2, dadurch gekennzeichnet, daß der erste Antriebsmotor (3) ebenfalls als Hohlwellenmotor ausgebildet ist.

4. Elektrischer Kompaktantrieb nach Anspruch 3, dadurch gekennzeichnet, daß der Rotor (32) des ersten Antriebsmotors (3) auf eine zentrale Hohlwelle (4) aufgesetzt ist.

5. Elektrischer Kompaktantrieb nach Anspruch 4, dadurch gekennzeichnet, daß die zentrale Hohlwelle (4) die erste Antriebswelle (1) über ein Zahnradpaar (42, 13) antreibt.

6. Elektrischer Kompaktantrieb nach Anspruch 4, dadurch gekennzeichnet, daß durch die zentrale Hohlwelle (4) eine Hub- und Drehspindel (9) hindurchgeführt ist.

7. Elektrischer Kompaktantrieb nach Anspruch 6, dadurch gekennzeichnet, daß der Hubantrieb der Hub- und Drehspindel (9) von der ersten Antriebswelle (1) abgeleitet wird und daß der Drehantrieb der Hub- und Drehspindel (9) von der zweiten Antriebswelle (2) abgeleitet ist.

8. Elektrischer Kompaktantrieb nach einem der vorhergehenden Ansprüche, dadurch gekennzeichnet, daß der Hohlwellenteil (21) der zweiten Antriebswelle (2) exzentrisch zu ihrer Drehachse (DA 2) ausgerichtet ist.

9. Elektrischer Kompaktantrieb nach Anspruch 7, dadurch gekennzeichnet, daß die Übertragungselemente zwischen der ersten Antriebswelle (1) bzw. der zweiten Antriebswelle (2) und der Hub- und Drehspindel (9) innerhalb des Hohlwellenteils (21) der zweiten Antriebswelle (2) angeordnet sind.

10. Elektrischer Kompaktantrieb nach Anspruch 9, dadurch gekennzeichnet, daß das freie Ende des Hohlwellenteils (21) durch eine Kappe (213) verschlossen ist.

## Claims

1. A compact electrical drive, in particular a positioning drive having two drive shafts which can be driven independently of one another, where the first drive shaft (1) is arranged within the second drive shaft (2), which has the form of a hollow shaft, characterised by the following features :

a) the first drive shaft (1) as assigned a first drive motor (3) ;

b) the second drive shaft (2) is assigned a second drive motor (5) in the form of a hollow shaft motor ;

c) between the second drive motor (5) and the second drive shaft (2) there is connected a transmission (7) whose inner drive element, coupled to the rotor (52) of the second drive motor (5), is arranged coaxially with an outer driven element ; and

d) the stator (31) of the first drive motor (3), the stator (51) of the second drive motor (5), and the outer driven element of the transmission (7) and the second drive shaft (2) are rigidly coupled to one another in order to achieve synchronism.

2. A compact electrical drive as claimed in Claim 1, characterised in that the transmission (7) represents a stressed shaft transmission, whose driven shaft (71, 72, 73) is formed by the inner drive element and whose externally toothed elastic clamping wheel (76) is formed by the outer driven element, where the clamping wheel (76) is in engagement with a stationary internally toothed outer ring (81).

3. A compact electrical drive as claimed in Claim 1 or 2, characterised in that the first drive motor (3) has the form of a hollow shaft motor.

4. A compact electrical drive as claimed in Claim 3, characterised in that the rotor (32) of the first drive motor (3) is positioned on a central hollow shaft (4).

5. A compact electrical drive as claimed in Claim 4, characterised in that the central hollow shaft (4) drives the first drive shaft (1) via a pair of gear wheels (42, 13).

6. A compact electrical drive as claimed in Claim 4, characterised in that a lifting and rotating spindle (9) passes through the central hollow shaft (4).

7. A compact electrical drive as claimed in Claim 6, characterised in that the lifting drive of the lifting and rotating spindle (9) is derived from the first drive shaft (1), and that the rotation drive of the lifting and rotating spindle (9) is derived from the second drive shaft (2).

8. A compact electrical drive as claimed in one of the preceding Claims, characterised in that the hollow shaft component (21) of the second drive shaft (2) is aligned eccentrically to the axis of rotation (DA2).

9. A compact electrical drive as claimed in Claim 7, characterised in that the transmission elements between the first drive shaft (1) and second drive shaft (2) and the lifting and rotating spindle (9) are arranged inside the hollow shaft component (21) of the second drive shaft (2).

10. A compact electrical drive as claimed in Claim 9, characterised in that the free end of the hollow shaft component (21) is sealed by a cap (213).

## Revendications

1. Dispositif d'entraînement électrique compact, notamment servomoteur, comportant deux arbres d'entraînement pouvant être entraînés indépendamment l'un de l'autre, le premier arbre d'entraînement (1) étant disposé à l'intérieur du second arbre d'entraînement (2) réalisé sous la forme d'un arbre creux, caractérisé par les moyens particuliers suivants :

a) un premier moteur d'entraînement (3) est associé au premier arbre d'entraînement (1) ;

b) un second moteur d'entraînement (5), réalisé sous la forme d'un moteur à arbre creux, est associé au second arbre d'entraînement (2) ;

c) entre le second moteur d'entraînement (5) et le second arbre d'entraînement (2) se trouve montée une transmission (7) dont l'élément intérieur d'entraînement, qui est accouplé au rotor (52) du second arbre d'entraînement (5), est disposé coaxialement par rapport à un élément mené extérieur,

d) le stator (31) du premier moteur d'entraînement (3), le stator (51) du second moteur d'entraînement (5), l'élément mené extérieur de la transmission (7) et le second arbre d'entraînement (2) sont accouplés rigidement entre eux afin d'obtenir un synchronisme de fonctionnement.

2. Système d'entraînement électrique compact suivant la revendication 1, caractérisé par le fait que la transmission (7) est une transmission à impulsion de tension, dont le générateur d'impulsions de tension (71, 72, 73) forme l'élément intérieur d'entraînement et dont la roue de serrage élastique (76) à denture extérieure forme l'élément mené extérieur, la roue de serrage (76) engrenant avec une couronne extérieure fixe (80) portant une denture intérieure.

3. Dispositif d'entraînement électrique compact suivant la revendication 1 ou 2, caractérisé par le fait que le premier moteur d'entraînement (3) est réalisé également sous la forme d'un moteur à arbre creux.

4. Dispositif d'entraînement électrique compact suivant la revendication 3, caractérisé par le fait que le rotor (32) du premier moteur d'entraînement (3) est monté sur un arbre central creux (4).

5. Dispositif d'entraînement électrique compact suivant la revendication 4, caractérisé par le fait que l'arbre creux central (4) entraîne le premier arbre d'entraînement (1) par l'intermédiaire d'un couple de roues dentées (42, 13).

6. Dispositif d'entraînement compact électrique suivant la revendication 4, caractérisé par le fait qu'une broche (9) de levage et de descente et d'entraînement en rotation s'étend à travers l'arbre creux central (4).

7. Dispositif d'entraînement électrique compact suivant la revendication 6, caractérisé par le fait que l'entraînement vertical de la broche (9) de levage et de descente et d'entraînement en rotation est dérivé du premier arbre d'entraînement (1) et que l'entraînement en rotation de la broche (9) de levage et de descente et d'entraînement en rotation est dérivé du second arbre d'entraînement (2).

8. Dispositif d'entraînement électrique compact suivant l'une des revendications précédentes, caractérisé par le fait que la partie (21) formant arbre creux du second arbre d'entraînement (2) est alignée en étant excentrée par rapport à son axe de rotation (DA2).

9. Dispositif d'entraînement électrique compact suivant la revendication 7, caractérisé par le fait que les éléments de transmission entre le premier arbre d'entraînement (1) et le second arbre d'entraînement (2) et la broche (9) de levage et de descente et d'entraînement en rotation sont disposés à l'intérieur de la partie formant arbre creux (21) du second arbre d'entraînement (2).

10. Dispositif d'entraînement électrique compact suivant la revendication 9, caractérisé par le fait que l'extrémité libre de la partie formant arbre creux (21) est fermée par un capot (213).

0 075 749

FIG 1

FIG 2

FIG 3